# EUROPEAN PATENT SPECIFICATION

(11) **EP 0 652 846 B1**
(45) Date of publication and mention of the grant of the patent: **08.01.1997**
(21) Application number: 93921121.5
(22) Date of filing: 30.07.1993
(51) Int. Cl.: B66C 11/04, B60P 1/54

(54) **TROLLEY**
LAUFKATZE
CHARIOT PORTE-PALAN

(30) Priority: 31.07.1992 NL 9201388
(43) Date of publication of application: 17.05.1995
(73) Proprietor: JAN VAN HUET TRANSPORT B.V., 6902 PB Zevenaar (NL)
(72) Inventor: VAN HUET, Aloisius, Leonardus, Johannes, Maria, NL-7902 BC Zevenaar (NL)
(74) Representative: Smulders, Theodorus A.H.J., Ir.
(86) International application number: NL9300164
(87) International publication number: WO9403388

(56) References cited:
- WO-A-92/12025
- DE-A- 2 811 797
- DE-C- 699 408
- FR-A- 1 306 097
- FR-A- 1 441 669
- GB-A- 2 105 294
- US-A- 4 194 867
- US-A- 4 425 071
- US-A- 5 062 760

## Description

The invention relates to a trolley comprising a frame; at least four wheels coupled to the frame for movement of the trolley along a bearing girder; and hoist means carried by the frame.

Such a trolley is known in practice and is used for displacing objects along the bearing girder.

The trolley used in practice is quite satisfactory in locations where sufficient height is present, such as, for instance, in constructional shops. An object to be displaced is lifted to a desired height by the hoist means, displaced along the bearing girder, while, possibly, the bearing girder itself is in turn displaced at right angles relative to its longitudinal direction, until the object has been brought to a desired location, whereafter it is lowered by the hoist means.

However, the trolley used in practice is less satisfactory in places where the available height is limited, for instance when used in the loading space of a cargo vehicle. Such a use is described in, for instance, British patent application 2,105,294. It will be clear that in the case of such a trolley, suspended below the bearing girder, the maximum accessible height to which an object can be lifted is limited. More particularly, the loading space in a cargo vehicle wherein such a trolley is applied can then be used up to a limited height only, and the objects to be transported in this cargo vehicle are limited in height, which is a drawback from an economic point of view.

French patent specification 1,441,669 discloses a trolley of the above-mentioned type, where respectively two front wheels and two rear wheels are provided on both sides of the frame, the hoist means comprising a winch drum rotatably mounted in the frame substantially at the level of the wheels, around which a hoist rope or hoist chain is wound. The trolley disclosed in the French patent specification 1,441,669 provides an improvement over the above-mentioned trolley, known from practice, insofar as it takes up less space in vertical direction, so that a cargo vehicle can be loaded more efficiently and higher objects can be loaded.

The object of the invention is to further improve this trolley disclosed in French patent specification 1,441,669.

The object of the invention is in particular to provide a trolley that allows for a further gain of height. Starting from the known trolley, this could in principle be achieved by reducing the vertical dimensions thereof, but that implies that the diameter of the winch drum is reduced, which is irrevocably at the expense of the strength and the hoisting capacity. Hence, the object of the invention is to enable the gain of height at a constant or even increased hoisting capacity.

According to the invention, this object is realized in that the winch drum comprises a helical groove for receiving the hoist rope, and a hold-down roller is disposed along the winch drum for holding down the hoist rope in the grooves of the winch drum.

In a preferred embodiment of the trolley according to the invention, the above-mentioned winch drum is arranged within the frame within a quadrangle defined by the wheels. As a result, the trolley behaves more stably, also in the case of very heavy loads.

A particularly disadvantageous aspect of the known trolley resides in the fact that in this trolley the winch drum extends in transverse direction. When, in cases where the hoisting capacity is a less relevant aspect, it is wished to achieve a vertical gain in this construction through reduction of the vertical dimensions, the length of the drum should be increased to enable the same rope length to be wound onto the drum. This implies that the width dimension of the trolley increases. When the trolley is used in a truck, however, this has as a consequence that a lifting eye can be brought less close to the side wall of the loading space of that truck.

To solve this problem as well, in a particular preferred embodiment of the trolley according to the invention, the winch drum extends in the longitudinal direction of the trolley. Within the framework of the present application, this means that the rotary shaft of the winch drum is substantially perpendicular to the rotary shafts of the wheels.

As a result, it is firstly accomplished that the trolley can be of a narrower design with the same or even a greater length of the winch drum, so that a lift eye can be brought closer to the side wall of the loading space. This is important in particular when the objects to be loaded are plate-shaped, such as glass plates.

Secondly, it is accomplished that a motor for driving the winch drum can be arranged in line with the shaft of the winch drum, with optional intermediate coupling of a reduction system, also arranged in line with that shaft. Thus, advantageously, use can be made of relatively simple standard commercially available components in a modular construction. Further, no bevel gearing is required, and the number of components to be mounted in the frame is reduced, while the mounting construction can be simplified, so that the trolley can be manufactured more cheaply. As the frame can be of a simpler design, a saving in weight is realized as well.

The invention further relates to a cargo vehicle with a loading space for transporting objects, which vehicle is provided with a bearing girder, mounted in the loading space, at the top thereof, extending in the longitudinal direction of the vehicle, and with a trolley movable along the bearing girder.

Hereinafter, a preferred embodiment of the trolley according to the invention will be further explained in the following description with reference to the accompanying drawings. In these drawings:
Figure 1 schematically shows a front view of a trolley known in practice;
Figure 2 schematically shows a rear view of a truck with the known trolley mounted therein;
Figure 3 schematically shows a front view of the trolley according to the invention;
Figure 4 schematically shows a top plan view of a first practical variant of the trolley according to the invention;
Figure 5 schematically shows a section taken on the line V-V in Fig. 4;
Figure 6 schematically shows a top plan view of a preferred embodiment of the trolley according to the invention;
Figure 7 schematically shows a section taken on the line VII-VII in Fig. 6;
Figure 7B schematically shows a variant of a constructional detail of the trolley shown in Figs 6 and 7; and
Figure 8 shows a section taken on the line VIII-VIII in Fig. 5.

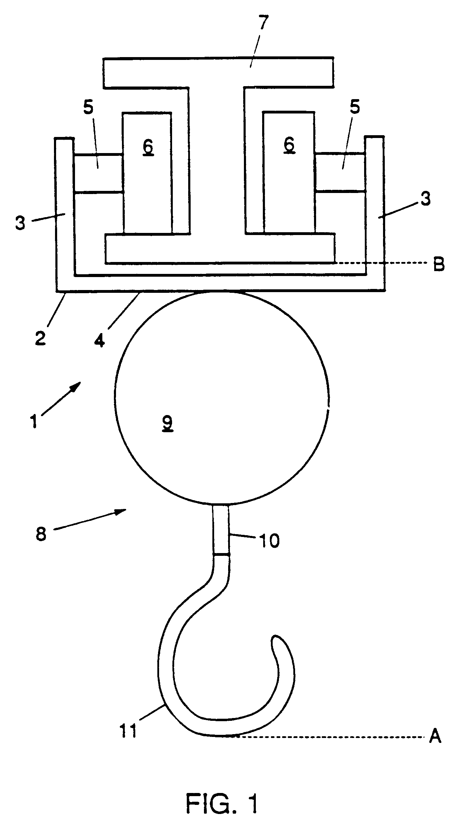

Presently, reference is made to Fig. 1, where an example of a known trolley is generally designated by the reference numeral 1. The trolley 1 has a U-shaped frame 2 having two upright legs 3 and a bottom 4 connecting the legs 3. Extending inwards from the legs 3 are respective shafts 5, on which respective wheels 6 are mounted. By means of the wheels 6, the trolley 1 can be moved along a bearing girder 7 in the form of an inverted T section or an I section.

Mounted below the bottom 4 are hoist means 8, such as a motor-driven winding drum 9 for a hoist rope 10, to which a gripping element 11, such as a hook or the like, is attached.

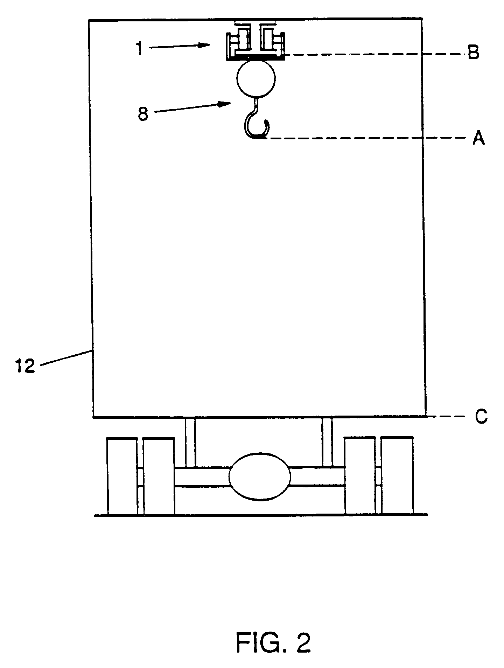

Fig. 1 clearly shows that the hook 11 cannot be hoisted higher than a level indicated by A, located at a considerable distance from the bottom of the bearing girder 7, as indicated by B. The exact value of that distance depends on the dimensions of the parts used. When such a trolley 1 is used in a cargo vehicle 12, as shown schematically in Fig. 2, the available loading space of the cargo vehicle 12 can be utilized to the maximum height AC only, which means a limitation of transporting capacity, while the objects to be transported can have a maximum height AC only, which imposes a height limit on the objects to be transported. In this connection, it should be borne in mind that in a practical sense, the height of the loading platform is partially determined by the necessary presence of wheels under the vehicle, and that in many countries the maximum height of a transport vehicle is bound to a maximum prescribed by law, which is 4 meters in the Netherlands.

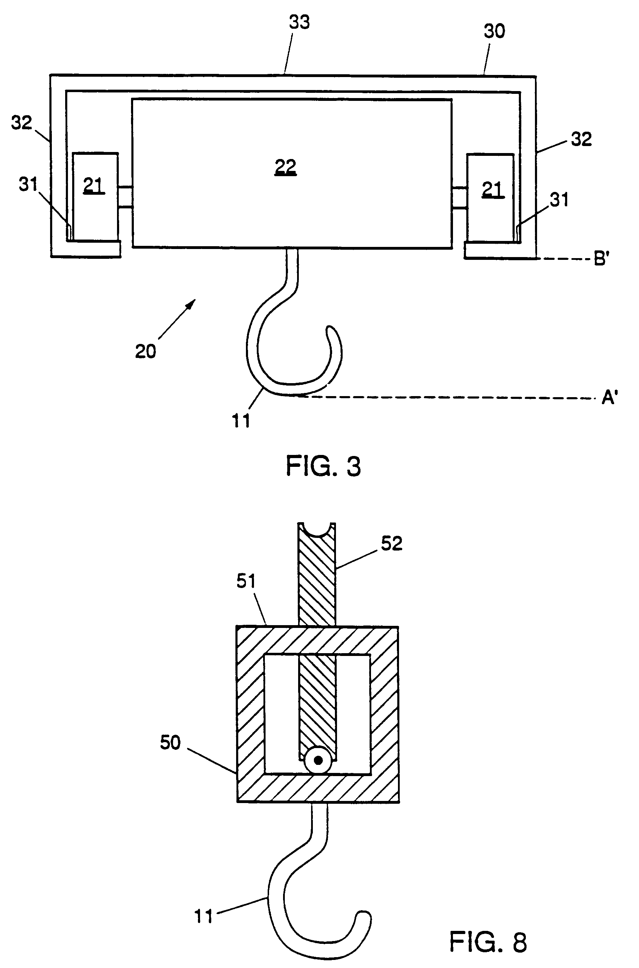

The trolley according to the invention, generally designated by reference numeral 20 in the schematic front view of Fig. 3, has the above-mentioned limitations only to a considerably reduced extent.

In the trolley 20, the wheels 21 are provided on both sides of the frame 22. As a result, the trolley is suitable for cooperating with a bearing girder 30 which has at least two tracks 31, located on both sides of the trolley 20, for the wheels 21. In a suitable embodiment, the bearing girder 30 is formed by mounting two L sections, inverted T sections or I sections as side walls 32 on a top wall 33. Optionally, these side walls 32 may also be mounted directly on the ceiling of a truck.

By means of the wheels 21, the trollley 20 can be displaced along the bearing girder 30. Because the nature and construction of the driving means that can be used for this do not constitute a subject of the present invention, and it is not necessary for a skilled person to have any knowledge thereof to properly understand the present invention, they will not be further described. It suffices to observe that these driving means may be external, such as by means of a chain, or internal, such as by means of a motor mounted in the frame and driving the wheels.

The hoist means (not shown in Fig. 3) are arranged within the frame 22, at the level of the wheels 21. Even when the hoist means are the same as those described with reference to Fig. 1, an improvement is now realized, according to the invention, in that in the highest position of the gripping element (hook) 11, the level A' is located much closer to the lower side (B') of the bearing girder 30, and may, in some situations, even be located above the lower side (B') of the bearing girder 30, because this gripping element 11 can be lifted as far as between the wheels 21.

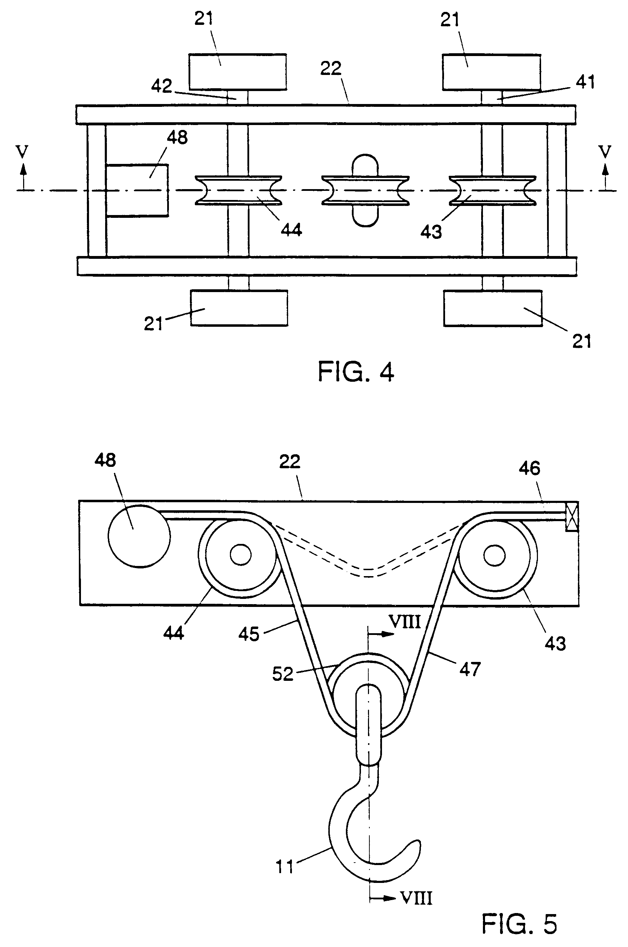

Now, a first practical variant of the trolley 20 according to the invention will be described with reference to Figs 4 and 5. The front wheels 21 are mounted on a common front shaft 41, and the rear wheels 21 are mounted on a common rear shaft 42. Further, mounted within the frame 22 are a front guide wheel 43 and a rear guide wheel 44. Preferably, and as illustrated in Fig. 4, the guide wheels 43 and 44 are respectively mounted on the shafts 41 and 42, always between the wheels 21, so that a compact construction is realized. The guide wheels 43 and 44 are rotatable relative to the frame 22, for instance because the guide wheels 43 and 44 are mounted on the shafts 41, 42 by means of ball bearings (not shown).

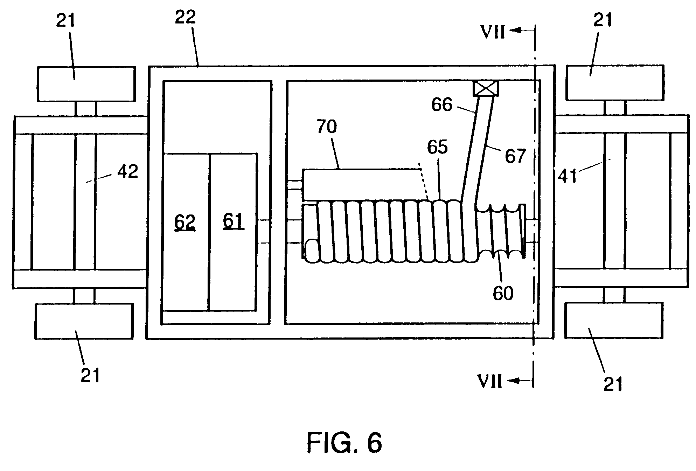

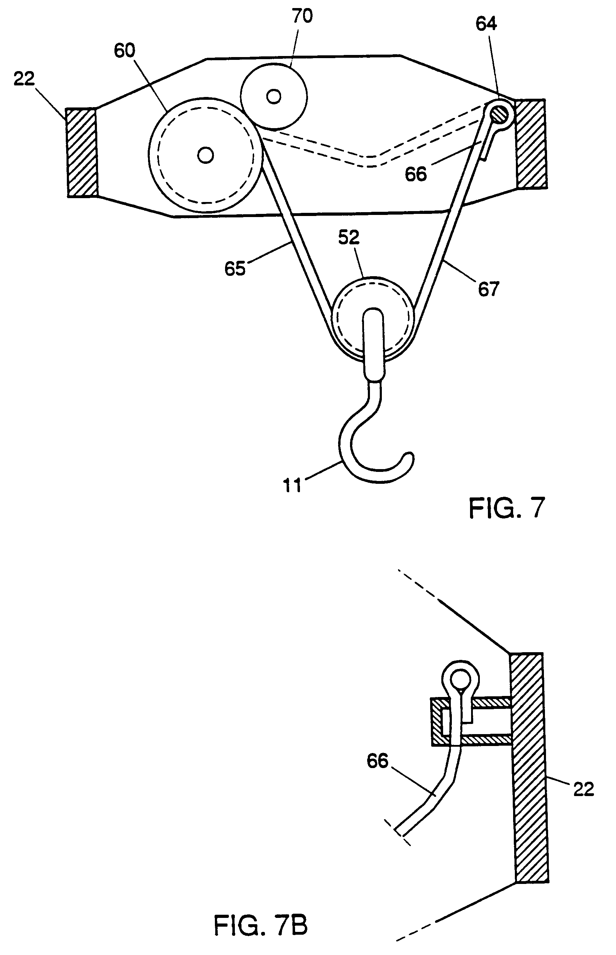

Guided over the guide wheels 43, 44 is a hoist rope or hoist chain 45. By its free end 46, the hoist rope 45 is attached to the frame 22 by means of any suitable fastening means, as will be clear to a skilled person, which fastening means are not shown for simplicity's sake. From this free end, the hoist rope 45 extends over the front guide wheel 43 to the rear guide wheel 44, and hence to a winch drum 48, shown in Figs 4 and 5 only schematically. A more detailed description of a winch drum will be given hereinafter with reference to Figs 6 and 7.

The portion of the hoist rope 45 located between the guide wheels 43, 44 is freely suspended in the form of a U-shaped loop 47. The gripping element 11 is coupled to this intermediate portion 47 of the hoist rope 45, and can be displaced freely along it. Fig. 8 shows in a more detailed manner that for that purpose, the gripping element 11 can be attached to a four-sided frame 50 through which extends the hoist rope 45. This frame 50 has an upper frame portion 51 in the form of a shaft on which a wheel 52 is rotatably mounted, capable of riding over the hoist rope 45.

Due to gravity, the wheel 52 with the gripping element 11 is always located at the lowermost portion of the U-shaped loop 47. When the gripping element 11 is to descend, the hoist operating means 48 pay out the hoist rope 45, in the example referred to by unwinding the above-mentioned drum, so that the length of the U-shaped loop 47 is increased. When the gripping element 11 is to be hoisted, the hoist operating means 48 haul up the hoist rope 45, in the example referred to by winding up the above-mentioned drum, so that the length of the U-shaped loop 47 is reduced. In order to bring the gripping element 11 into the highest extreme position, the hoist rope 45 can be pulled practically taut between the guide wheels 43, 44, as indicated by the dotted line in Fig. 5. In this respect, the most important limiting factors are on the one hand the dimensions of the wheel 52 and on the other hand the maximum allowable tension in the rope 45 and the maximum pull that can be produced by the hoist operating means 48. In this highest extreme position, the gripping element 11 is located at a level A' quite close to the lower side B' of the bearing girder 30 (see Fig. 3), and which, depending on the dimensions of the parts used, may be located even above the lower side of the bearing girder 30, as this gripping element 11 can be lifted as far as between the wheels 21.

When the hoist rope 45 is pulled up/paid out, the rear guide wheel 44 rotates on the shaft 42. The front guide wheel 43 will hardly rotate, and in fact only serves to prevent sharp kinks in the rope 45; for this reason, the front guide wheel 43 may be fixedly mounted. It is also possible that the free end 46 of the hoist rope 45 is attached not to the frame 22 but to the fixedly mounted front guide wheel 43, or that the free end 46 of the hoist rope 45 is pivoted to the frame 22 with the omission of the front guide wheel 43.

Now, another preferred embodiment of the trolley 20 will be described with reference to Fig. 6 and 7. In these figures, parts that are equal to or comparable with parts in the preceding figures are designated by the same reference numerals.

In this embodiment, the hoist means comprise a winch drum 60, rotatably mounted in the frame 22, preferably in the longitudinal direction thereof, capable of being driven by a motor 62, also mounted in the frame 22, via a reduction system 61. For simplicity's sake, the reduction system 61 and the motor 62 are shown only schematically. The reduction system 61 may be provided with a brake to retain the winch drum 60 in a particular position when the energization of the motor 62 is switched off.

The winch drum 60 has a helical groove for receiving a hoist rope 65. This hoist rope 65 is attached by its free end 66 to the frame 22, in the vicinity of the top thereof. In the example illustrated, the end 66 of the hoist rope 65 is pivoted to the frame 22 by means of an eye 64 formed on the hoist rope 65. Optionally, the end 66 of the hoist rope 65 can be fixedly attached to the frame 22 when little risk of kinking is involved. In this connection, it is advisable to mount the end vertically, as shown in Fig. 7B. If so desired, the hoist rope 65, starting from the free end 66, may first be guided over a guide wheel, as discussed in the previous example.

Starting from the free end 66, the hoist rope 65 extends to the top of the winch drum 60 and from there is wound around the winch drum 60 in the groove thereof. Rotatably mounted in the frame 22, along the winch drum 60 and parallel thereto, is a hold-down roller 70. The hold-down roller 70, only partly shown in Fig. 6, presses against the windings of the hoist rope 65 to ensure that they cannot disengage from the groove. A suitable embodiment of the hold-down roller 70 comprises a steel bush with a synthetic covering, rotatably mounted on a shaft.

The portion of the hoist rope 65 located between the free end 66 and the winch drum 60 is freely suspended in the form of a U-shaped loop 67. The gripping element 11 is coupled to this intermediate portion 67 of the hoist rope 65, and can move freely along it, as discussed in the preceding example.

When the gripping element 11 is to descend, the motor 62 rotates the winch drum 60 clockwise in Fig. 7, so that the length of the U-shaped loop 67 is increased. When the gripping element 11 is to be hoisted, the motor 62 rotates the winch drum 60 anti-clockwise in Fig. 7, so that the length of the U-shaped loop 67 is reduced. In order to bring the gripping element 11 into the highest extreme position, the hoist rope 65 can be pulled practically taut between the winch drum 60 and the frame 22, as indicated by the dotted line in Fig. 7. In this respect, the most important limiting factors are again on the one hand the dimensions of the wheel 52 and on the other hand the maximum allowable tension in the rope 65 and the maximum pull that can be produced by the motor 62, as discussed hereinabove. In this highest extreme position, the gripping element 11 is located at a level A' close to the lower side B' of the bearing girder 30 (see Fig. 3), and which, depending on the dimensions of the parts used, may be located even above the lower side of the bearing girder 30, as this gripping element 11 can be lifted as far as between the wheels 21.

It is observed that, if so desired, the frame 22 between the front and rear shafts 41 and 42 may be widened, of course in such a manner that this fits within the bearing girder 30, to provide room for the motor, the reduction system, the winch drum, the hold-down roller and the gripping element without the trolley in its entirety becoming wider, as illustrated in Fig. 6.

## Claims

1. A trolley (20) comprising:
a frame (22);
at least four wheels (21) coupled to the frame for movement of the trolley (20) along a bearing girder (30); and
hoist means carried by the frame;
respectively two front wheels and two rear wheels being provided on both sides of the frame (22), and the hoist means comprising a winch drum (60) rotatably mounted in the frame (22) substantially at the level of the wheels (21), around which a hoist rope or hoist chain (65) is wound;
characterized in that:
the winch drum (60) comprises a helical groove for receiving the hoist rope (65), and a hold-down roller (70) is disposed along the winch drum (60) for holding down the hoist rope (65) in the grooves of the winch drum (60).

2. A trolley according to claim 1, characterized in that said winch drum (60) is arranged within the frame (22) within a quadrangle defined by the wheels (21).

3. A trolley according to claim 1 or 2, characterized in that the winch drum (60) extends in the longitudinal direction of the trolley (20).

4. A trolley according to claim 3, characterized in that the winch drum (60) is coupled to a motor (62) mounted in the frame (22) in line with the rotary shaft of the winch drum (60).

5. A trolley according to at least one of the preceding claims, characterized in that the hoist rope (65) is attached by a free end (66) to the frame (22), and that a gripping element (11), such as a lift eye, can move freely over the hoist rope portion (67) between said free end (66) and the winch drum (60).

6. A trolley according to claim 5, characterized in that the free end (66) of the hoist rope (65) is attached in the vicinity of the top of the frame (22) and that the hoist rope (65), viewed from said free end (66), is wound up starting at the top of the winch drum (60).

7. A trolley according to any one of the preceding claims, characterized in that the front wheels (21) are mounted on a common front shaft (41), and that the rear wheels (21) are mounted on a common rear shaft (42).

8. A trolley according to any one of the preceding claims, characterized in that there is provided at least one guide wheel (43; 44), placed in the frame (22), for guiding the hoist rope or hoist chain (45).

9. A cargo vehicle with a loading space for transporting objects, said vehicle being provided with a bearing girder (30), mounted in the loading space, at the top thereof, extending in the longitudinal direction of the vehicle, and with a trolley (20) movable along the bearing girder (30), according to at least one of claims 1-7.

## Patentansprüche

1. Laufkatze (20) mit
einem Rahmen (22);
mindestens vier Rädern (21), die mit dem Rahmen verbunden sind, um eine Bewegung der Laufkatze (20) entlang eines Tragbalkens (30) zu ermöglichen; und
einer von dem Rahmen gehaltenen Windeneinrichtung;
wobei an beiden Seiten des Rahmens (22) zwei Vorderräder bzw. zwei Hinterräder vorgesehen sind und die Windeneinrichtung eine im wesentlichen auf der Ebene der Räder (21) angeordnete, drehbar in dem Rahmen (22) montierte Windentrommel (60) aufweist, um die ein Windenseil oder eine - Windenkette (65) gewickelt ist;
dadurch gekennzeichnet, daß
die Windentrommel (60) eine schraubenförmige Nut zur Aufnahme des Windenseils (65) aufweist und entlang der Windentrommel (60) eine Niederhalterolle (70) angeordnet ist, die das Windenseil (65) in die Nuten der Windentrommel (60) gedrückt hält.

2. Laufkatze nach Anspruch 1, dadurch gekennzeichnet, daß die Windentrommel (60) in dem Rahmen (22) innerhalb eines durch die Räder (21) definierten Vierecks angeordnet ist.

3. Laufkatze nach Anspruch 1 oder 2, dadurch gekennzeichnet, daß sich die Windentrommel (60) in der Längsrichtung der Laufkatze (20) erstreckt.

4. Laufkatze nach Anspruch 3, dadurch gekennzeichnet, daß die Windentrommel (60) mit einem Motor (62) verbunden ist, der in dem Rahmen (22) in Linie mit der Drehwelle der Windentrommel (60) montiert ist.

5. Laufkatze nach mindestens einem der vorhergehenden Ansprüche, dadurch gekennzeichnet, daß das Windenseil (65) mit einem freien Ende (66) an dem Rahmen (22) befestigt ist, und daß ein Greifelement (11), z.B. ein Hebe-Ring, frei über dem zwischen dem freien Ende (66) und der Windentrommel (60) gelegenen Windenseil-Anschnitt (67) bewegbar ist.

6. Laufkatze nach Anspruch 5, dadurch gekennzeichnet, daß das freie Ende (66) des Windenseils (65) in der Nähe der Oberseite des Rahmens (22) befestigt ist und daß das Windenseil (65) bei Betrachtung von dem freien Ende (66) her ausgehend von der Oberseite der Windentrommel (60) aufgewickelt ist.

7. Laufkatze nach einem der vorhergehenden Ansprüche, dadurch gekennzeichnet, daß die Vorderräder (21) an einer gemeinsamen Vorderachse (41) montiert sind und daß die Hinterräder (21) an einer gemeinsamen Hinterachse (42) montiert sind.

8. Laufkatze nach einem der vorhergehenden Ansprüche, dadurch gekennzeichnet, daß mindestens ein in dem Rahmen (22) plaziertes Führungsrad (43;44) vorgesehen ist, um das Windenseil oder die Windenkette (65) zu führen.

9. Lastfahrzeug mit einem Laderaum zum Transportieren von Gegenständen, mit einem Tragbalken (30), der in dem Laderaum an dessen Oberseite montiert ist und sich in Längsrichtung des Fahrzeugs erstreckt, und mit einer entlang dem Tragbalken (30) bewegbaren Laufkatze (20) nach mindestens einem der Ansprüche 1-7.

## Revendications

1. Chariot (20), comprenant :
un châssis (22),
au moins quatre roues (21) couplées au châssis afin qu'elles permettent le déplacement du chariot (20) le long d'une poutre de support (30), et
un dispositif de levage porté par le châssis,
deux roues avant et deux roues arrière respectives étant placées des deux côtés du châssis (22) et le dispositif de levage comprenant un tambour (60) de treuil monté afin qu'il tourne dans le châssis (22) pratiquement au niveau des roues (21) et autour duquel est enroulé un câble ou une chaîne (65) de levage,
caractérisé en ce que :
le tambour (60) de treuil a une gorge hélicoïdale pour le logement du câble (65) de levage, et un galet d'appui (70) est placé le long du tambour (60) de treuil afin qu'il appuie sur le câble de levage (65) dans les gorges du tambour (60) de treuil.

2. Chariot selon la revendication 1, caractérisé en ce que le tambour (60) de treuil est placé dans le châssis (22) dans un quadrilatère délimité par les roues (21).

3. Chariot selon la revendication 1 ou 2, caractérisé en ce que le tambour (60) de treuil est placé dans la direction longitudinale du chariot (20).

4. Chariot selon la revendication 3, caractérisé en ce que le tambour (60) de treuil est couplé à un moteur (62) monté dans le châssis (22) dans l'alignement de l'arbre de rotation du tambour (60) de treuil.

5. Chariot selon l'une au moins des revendications précédentes, caractérisé en ce que le câble de levage (65) est fixé par une extrémité libre (66) au châssis (22), et en ce qu'un élément de serrage (11), par exemple un oeillet de levage, peut être déplacé librement sur la partie de câble de levage (67) comprise entre l'extrémité libre (66) et le tambour (60) de treuil.

6. Chariot selon la revendication 5, caractérisé en ce que l'extrémité libre (66) du câble de levage (65) est fixée au voisinage de la partie supérieure du châssis (22), et le câble de levage (65), vu par son extrémité libre (66), est enroulé depuis la partie supérieure du tambour (60) de treuil.

7. Chariot selon l'une quelconque des revendications précédentes, caractérisé en ce que les roues avant (21) sont montées sur un arbre avant commun (41), et les roues arrière (21) sont montées sur un arbre arrière commun (42).

8. Chariot selon l'une quelconque des revendications précédentes, caractérisé en ce qu'il comporte au moins une roue (43 ; 44) de guidage placée dans le châssis (22) et destinée à guider le câble de levage ou la chaîne de levage (45).

9. Véhicule de transport de marchandises ayant un espace de chargement pour le transport d'objets, le véhicule ayant une poutre de support (30) montée dans l'espace de chargement à sa partie supérieure, dans la direction longitudinale du véhicule, et un chariot (20) mobile le long de la pointe de support (30) selon l'une au moins des revendications 1 à 7.
